# EUROPÄISCHE PATENTSCHRIFT

(11) **EP 3 160 691 B1**
(45) Veröffentlichungstag und Bekanntmachung des Hinweises auf die Patenterteilung: **21.04.2021**
(21) Anmeldenummer: 15733707.2
(22) Anmeldetag: 30.06.2015
(51) Int. Cl.: B25J 11/00, B25J 17/02, B21J 15/10, B25J 15/00

(54) **MANIPULATOR MIT EINEM MANIPULATORARM**
MANIPULATOR COMPRISING A MANIPULATOR ARM
MANIPULATEUR COMPORTANT UN BRAS DE MANIPULATEUR

(30) Priorität: 30.06.2014 DE 102014009478
(43) Veröffentlichungstag der Anmeldung: 03.05.2017
(73) Patentinhaber: BA Assembly & Turnkey Systems GmbH, 74321 Bietigheim-Bissingen (DE)
(72) Erfinder: PIDAN, Sergej, 71364 Winnenden (DE); OETKEN, Thomas, 28257 Bremen (DE)
(74) Vertreter: Gottschald, Jan
(86) Internationale Anmeldenummer: PCT/EP2015/064865
(87) Internationale Veröffentlichungsnummer: WO 2016/001235

(56) Entgegenhaltungen:
- DE-A1- 19 637 177
- DE-A1-102004 006 407
- DE-A5-112005 002 827
- JP-A- H11 207 685
- US-A- 5 331 770
- US-A- 5 974 643
- US-A1- 2013 273 818

## Beschreibung

Die Erfindung betrifft einen Manipulator mit einem Manipulatorarm, an dessem freien Ende ein Endeffektor mit mehreren Applikationsvorrichtungen zum Bearbeiten eines Werkstücks gehalten ist.

Ein bekannter Manipulator, z. B. ein Knickarm-Roboter, weist sechs Achsen auf, um die ein Manipulatorflansch zu bewegen ist. An dem Manipulatorflansch ist ein Endeffektor mit Applikationsvorrichtungen wie z. B. Bearbeitungswerkzeugen zum Bohren, Fräsen oder Räumen oder z. B. Messinstrumenten zum Positionieren des Endeffektors bzw. der Applikationsvorrichtung oder zur Erfassung der Geometrie des Werkstücks oder zum Ausmessen von Bohrlöchern und dgl. vorgesehen. Die bei der mechanischen Bearbeitung auftretenden Prozesskräfte werden am Manipulatorflansch aufgenommen und wirken je nach Pose des Roboters um alle sechs Achsen. Die durch auftretende Prozesskräfte erzeugten Momente um die jeweiligen Haupt- und Handachsen des Manipulators haben Auswirkungen auf die Bearbeitungsgenauigkeit, da die Momente den Roboter von seiner vorgegebenen Sollposition der Bearbeitung abdrängen können.

In der JP H11-207685 ist ein Manipulator beschrieben, dessen Manipulatorarm einen um Handachsen drehbaren Manipulatorflansch aufweist, der einen Endeffektor hält, wobei eine erste Handachse sich in Richtung der Längsachse des Manipulatorarmes erstreckt, eine zweite Handachse sich quer zur ersten Handachse erstreckt uns eine dritte Handachse quer zur zweiten Handachse liegt.

In der US 5, 974,643 ist ein zweiteiliger Endeffektor mit einer Basis, welche einen Antrieb aufweist, und mit einem von der Basis lösbaren Turm mit mehreren Applikationsvorrichtungen beschrieben, wobei mit dem Antrieb der Basis eine Applikationsvorrichtung in eine aktive Arbeitsposition gedreht werden kann In der DE 196 37 177 A1 ist ein weiterer ähnlicher Endeffektor beschrieben.

Der Erfindung liegt die Aufgabe zugrunde, einen einfachen und kostengünstigen Manipulator mit verschiedenen Applikationsvorrichtungen bereitzustellen.

Die Aufgabe wird erfindungsgemäß nach den Merkmalen des Anspruchs 1 gelöst.

Bei dem Manipulator mit einem Manipulatorarm, an dessen freiem Ende ein Manipulatorflansch angeordnet ist, an dem ein Endeffektor mit einer Applikationsvorrichtung zur Bearbeitung eines Werkstücks vorgesehen ist, ist der Endeffektor um drei Handachsen drehbar. Eine erste Handachse erstreckt sich in Richtung der Längsachse des Manipulatorarms, eine zweite Handachse erstreckt sich quer zur ersten Handachse und eine dritte Handachse liegt quer zur zweiten Handachse. Der Endeffektor trägt mehrere Applikationsvorrichtungen, die in Drehrichtung der dritten Handachse aufeinander folgen, wobei die Applikationsvorrichtungen durch Drehen des Endeffektors um die dritte Handachse in eine aktive Arbeitsposition zu verfahren sind. Durch diese Ausgestaltung wird erreicht, dass eigene Antriebe zum Verstellen der Applikationsvorrichtungen gegenüber dem Manipulatorflansch entfallen. Ein Wechsel des Werkzeugs bzw. ein Wechsel der Applikationsvorrichtung wird durch Drehen des Manipulatorflanschs um die dritte Handachse relativ zum Manipulatorarm ermöglicht.

Die Handachsen eines Handgelenks am Ende eines Manipulatorarms weisen einen gemeinsamen Schnittbereich auf. Die Applikationsvorrichtung wird unter einem Anbindungswinkel zur dritten Handachse an dem Manipulatorflansch angebunden, derart, dass die Richtung einer die Bearbeitungskraft abstützenden Gegenkraft durch den Schnittbereich der drei Handachsen verläuft. Dadurch ist gewährleistet, dass auftretende Prozesskräfte die Bearbeitungsposition des Roboterarms nicht durch um die Handachsen auftretende Momente beeinträchtigen. Der Schnittbereich ist dabei vorteilhaft ein kugelförmiger Bereich mit einem Radius von weniger als 100 mm. Wird die Anordnung so getroffen, dass die Richtung der Bearbeitungskraft durch einen gemeinsamen Schnittpunkt der Handachsen verläuft, werden alle durch Prozesskräfte möglichen Momente um die Handachsen eliminiert.

Es hat sich als zweckmäßig erwiesen, die Applikationsvorrichtung derart an den Manipulatorflansch des Manipulatorarms anzubinden, dass die Richtung der abstützenden Kraft unter einem Anbindungswinkel zur dritten Handachse liegt, der im Bereich zwischen 5° und 60° gewählt ist.

Vorteilhaft wird die Applikationsvorrichtung über eine Tragstütze am Manipulatorflansch gehalten, wobei die auf die Applikationsvorrichtung wirkenden Bearbeitungskräfte in einer Richtung wirken, die durch den Schnittbereich der Handachsen verläuft und die für mindestens eine vorgesehene Lage der Applikationsvorrichtung unter dem Anbindungswinkel zur dritten Handachse des Handgelenks liegt. Bei einer fest an der Tragstütze angeordneten Applikationsvorrichtung schließt die Richtung der Bearbeitungskräfte dabei mit der dritten Handachse den Anbindungswinkel ein. Bei einer schwenkbar an der Tragstütze angeordneten Applikationsvorrichtung liegt die Richtung der Bearbeitungskräfte vorteilhaft für mindestens eine vorgesehene Lage der Applikationsvorrichtung unter dem Anbindungswinkel zur dritten Handachse. Für alle vorgesehenen Lagen der Applikationsvorrichtung geht die Richtung der Bearbeitungskräfte durch den Schnittbereich der Handachsen. Dabei ist vorgesehen, dass die Schwenkachse eines Gelenks, über das die Applikationsvorrichtung an der Tragstütze gelagert ist, so ausgerichtet ist, dass die Richtung der Bearbeitungskräfte in jeder Schwenklage der Applikationsvorrichtung durch den Schnittbereich bzw. durch den Schnittpunkt der drei Handachsen verläuft. Die dritte Handachse des Handgelenks ist dabei die Drehachse des Manipulatorflanschs gegenüber einem Gehäuseteil des Handgelenks.

Der Endeffektor umfasst mehrere Applikationsvorrichtungen, die auf einer Mantellinie eines gedachten Kegels in Umfangsrichtung aufeinanderfolgen, wobei vorzugsweise deren Bearbeitungsachsen mit Mantellinien oder Seitenlinien eines Kegels zusammenfallen, dessen Kegelspitze im Schnittbereich der Handachsen liegt. Die Bearbeitungsachsen fallen dabei vorteilhaft mit Mantellinien eines Kegels zusammen, dessen Kegelspitze im Schnittpunkt der Handachsen liegt, oder liegen in geringem Abstand parallel versetzt zu Mantellinien dieses Kegels.

Zweckmäßig besitzt der drehbare Endeffektor eine Rahmenstruktur, die über eine Kupplung in einer ersten Kupplungsstellung drehfest mit einem Gehäuseteil des Manipulatorarms und in einer zweiten Kupplungsstellung drehfest mit dem Manipulatorflansch verbunden ist. Dabei umfasst die Kupplung Mitnahmeelemente des Endeffektors und eine zwischen dem Gehäuseteil und der Rahmenstruktur wirkende Klemmvorrichtung.

In vorteilhafter Weiterbildung der Erfindung ist an der Rahmenstruktur eine Druckstempelbuchse gehalten. Die Druckstempelbuchse ist längs einer Bearbeitungsachse gegen das Werkstück zu verfahren. Dadurch wird ein Verspannen des Manipulatorarms mit dem Endeffektor gegen das Werkstück möglich, was die Positionsgenauigkeit bei der Bearbeitung erhöht. Die an der Druckstempelbuchse eingeleiteten Kräfte können über die Rahmenstruktur und die Kupplung direkt in das Gehäuseteil eingeleitet werden. Dadurch wird die dritte Handachse entlastet.

Um die Leistungsfähigkeit eines Manipulators zu erhöhen, ist bei einem Verfahren zur Verbindung von Bauteilen durch einen Bolzen, insbesondere durch einen Nietbolzen unter Verwendung eines Manipulators am Ende eines Manipulatorarms ein Endeffektor mit Applikationsvorrichtungen vorgesehen. Die Applikationsvorrichtungen dienen zum Vermessen und Bearbeiten des Werkstücks, wobei in einem ersten Arbeitsschritt der Endeffektor positioniert wird, in einem zweiten Arbeitsschritt eine Durchgangsbohrung in das Werkstück gebohrt wird, in einem nächsten Arbeitsschritt ein Bolzen zugeführt wird und in einem folgenden Arbeitsschritt der Bolzen gesetzt und verfestigt wird. Zur Erhöhung der Leistungsfähigkeit ist vorgesehen, die Applikationsvorrichtungen des Endeffektors derart zu verwenden, dass zeitgleich zwei Arbeitsschritte ausgeführt werden können. So kann zeitgleich mit verschiedenen Arbeitsschritten auf das Werkstück eingewirkt werden, um z. B. eine Durchgangsbohrung zu bohren und gleichzeitig in eine andere Durchgangsbohrung einen Bolzen einzusetzen und zu verfestigen. Vorteilhaft werden die zeitgleich ausgeführten Arbeitsschritte in einer unveränderten relativen Lage des Endeffektors zum Werkstuck ausgeführt. Die zeitgleich ausgeführten Arbeitsschritte werden insbesondere auf unterschiedliche Durchgangsbohrungen, vorzugsweise benachbarte Durchgangsbohrungen angewendet.

Um zwei Applikationsvorrichtungen eines Endeffektors relativ zu einem Werkstück positionsgenau auszurichten, ist vorgesehen, dass die Applikationsvorrichtungen relativ zueinander in ihrer Lage am Manipulatorflansch verstellbar gehalten sind. Zweckmäßig ist dabei eine erste Applikationsvorrichtung unverstellbar am Manipulatorflansch gehalten und zusammen mit diesem auszurichten, während eine zweite Applikationsvorrichtung mit einer ihre Lage veränderbaren Versteilvorrichtung am Manipulatorflansch gehalten ist. So kann die zweite Applikationsvorrichtung nach Ausrichtung der ersten Applikationsvorrichtung auf die Bearbeitungsposition relativ zum Werkstück ausgerichtet werden.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung einen Manipulator am Beispiel eines Knickarm-Roboters mit sechs Bewegungsachsen,
- Fig. 2: in vergrößerter Darstellung den Endeffektor des Manipulatorarms mit angebundener Appiikationsvorrichtung,
- Fig. 3: eine Darstellung des Endeffektors gemäß Fig. 2 mit verschwenkter Arbeitslage der Applikationsvorrichtung,
- Fig. 4: in schematischer Darstellung einen Schnitt durch das Ende eines Manipulatorarms eines erfindungsgemäßen Manipulators, mit Endeffektor und Applikationsvorrichtung in Form eines Bohrwerkzeugs,

- Fig. 5: in schematischer Ansicht eine Skizze eines Endeffektors eines erfindungsgemäßen Manipulators, mit mehreren auf dem Umfang eines Kegels angeordneten Applikationsvorrichtungen,
- Fig. 6: in schematischer Darstellung eine Skizze eines Endeffektors mit mehreren Applikationsvorrichtungen zur zeitgleichen Ausführung von Arbeitsschritten an einem Werkstück,
- Fig. 7: eine tabellarische Übersicht zeitgleich ausführbarer Arbeitsschritte durch unterschiedliche Applikationsvorrichtungen eines Manipulators nach Fig. 6.

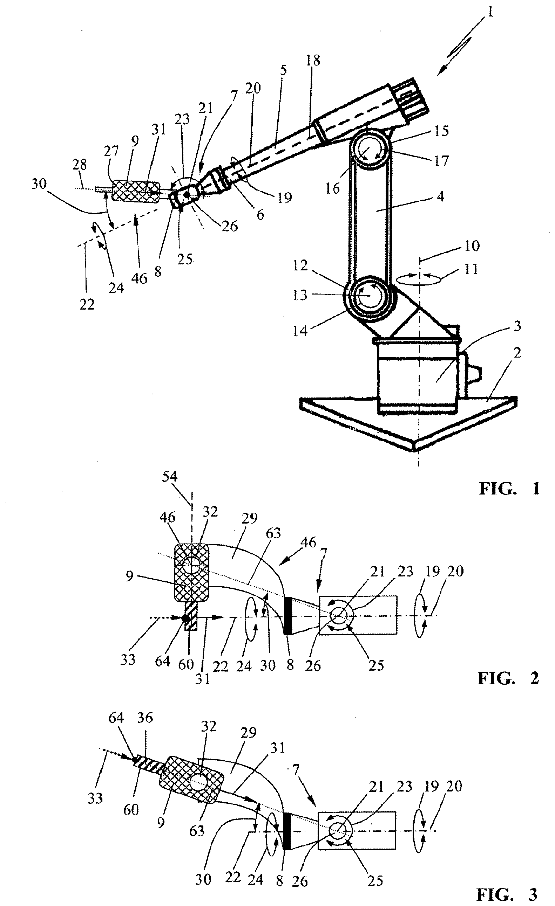

Der in Fig. 1 dargestellte Manipulator 1 ist als Knickarm-Roboter ausgeführt und weist eine Basis 2 auf, welche ein Karussell 3 trägt. Am Karussell 3 ist eine Schwinge 4 gehalten, die einen Manipulatorarm 5 trägt. Am ersten, freien Ende 6 des Manipulatorarms ist ein Handgelenk 7 vorgesehen, welches einen Manipulatorflansch 8 trägt. Am Manipulatorflansch 8 ist ein Endeffektor 46 gehalten, der mindestens eine Applikationsvorrichtung 9 umfasst, die z. B. als Messvorrichtung, als Greifvorrichtung, als Bohrwerkzeug, als Fräswerkzeug oder dgl. ausgebildet sein kann.

Das Karussell 3 ist mittels eines elektromotorischen Antriebs um eine vertikale Hauptachse 10 in Richtung des Doppelpfeils 11 über 360° drehbar. Die am Karussell 3 gehaltene Schwinge 4 ist über ein Drehgelenk 12 angebunden, welches eine liegende, horizontale Drehachse 13 bildet. Über einen weiteren elektromotorischen Antrieb ist die Schwinge 4 in Richtung des Doppelpfeils 14 um die horizontale Drehachse 13 schwenkbar. Die horizontale Drehachse 13 bildet die zweite Hauptachse des Manipulators 1.

Der Manipulatorarm 5 ist über ein weiteres Drehgelenk 15 am anderen Ende der Schwinge 4 gehalten, wobei das Drehgelenk 15 eine weitere horizontale Drehachse 16 ausbildet, die die dritte Hauptachse des Manipulators 1 darstellt. Der Manipulatorarm 5 ist in Richtung des Doppelpfeils 17 um die horizontale Drehachse 16 schwenkbar.

Das an einem freien Ende 6 des Manipulatorarms 5 gehaltene Handgelenk 7 ermöglicht Drehungen des Manipulatorflanschs 8 um drei Handachsen, die auch als Nebenachsen des Manipulators 1 bezeichnet werden. Das Handgelenk 7 mit dem Manipulatorflansch 8 ist um eine erste Handachse 20 gegenüber dem Manipulatorarm 5 drehbar, wie mit dem Doppelpfeil 19 angedeutet. Die erste Handachse 20 fällt im Ausführungsbeispiel mit der Längsachse 18 des Manipulatorarms 5 zusammen. Rechtwinklig zur ersten Handachse 20 liegt eine zweite Handachse 21, um die der Manipulatorflansch 8 entsprechend dem Doppelpfeil 23 drehbar ist. Das Handgelenk weist ferner eine dritte Handachse 22 auf, um die der Manipulatorflansch 8 entsprechend dem Doppelpfeil 24 schwenkbar ist. Die dritte Handachse 22 liegt rechtwinklig zur zweiten Handachse 21.

Die Handachsen 20, 21 und 22 haben einen gemeinsamen Schnittbereich 25, der vorzugsweise - wie in Fig. 1 gezeigt ist - einen gemeinsamen Schnittpunkt 26 bildet. Der Schnittbereich 25 ist vorteilhaft ein kugelförmiger Bereich mit einem Radius von weniger als 100 mm.

Am Manipulatorflansch 8 des Manipulatorarms 5 ist ein Endeffektor 46 angeordnet, der eine Applikationsvorrichtung 9 in der Form eines Bohrgerätes 27 besitzt. Die Applikationsvorrichtung 9 ist unter einem Anbindungswinkel 30 zur dritten Handachse 22 an den Manipulatorflansch 8 angeschlossen, wobei die beim mechanischen Bearbeiten eines Werkstücks, im Ausführungsbeispiel nach Fig. 1 beim Bohren, auftretenden Axialkräfte eine Richtung 31 aufweisen, die durch den Schnittbereich 25, insbesondere durch den Schnittpunkt 26 der Handachsen 20, 21 und 22 verläuft. Wie Fig. 1 zeigt, ist insbesondere vorgesehen, dass die Längsachse 28 des Bohrers 27 derart ausgerichtet liegt, dass sie - in gedachter Verlängerung - im Schnittbereich 25 die Handachsen 20, 21, 22 kreuzt, insbesondere durch den Schnittpunkt 26 der Handachsen verläuft. Die Längsachse 28 des Bohrers 27, die der Richtung 31 der bei der Bearbeitung auftretenden Prozesskräfte entspricht, liegt dabei unter einem Anbindungswinkel 30 zur dritten Handachse 22.

Durch diese Anordnung der Applikationsvorrichtung 9 unter dem Anbindungswinkel 30 zur dritten Handachse 22 des Handgelenks 7 kann der Einfluss der Prozesskräfte auf die Bearbeitungspose des Manipulatorarms 5 minimiert werden. Da die Richtung 31 der bei der Bearbeitung auftretenden Prozesskräfte durch den Schnittbereich der Handachsen 20, 21, 22 verläuft, können durch die Prozesskräfte keine größeren Momente um die jeweiligen Handachsen 20, 21, 22 erzeugt werden. Verläuft die Richtung 31 der Bearbeitungskräfte genau durch den Schnittpunkt 26 der Handachsen 20, 21 und 22, werden alle Momente der Prozesskraft um die Handachsen 20, 21, 22 vollständig eliminiert. Da die Applikationsvorrichtung 9 unter einem Anbindungswinkel 30 zur dritten Handachse 22 liegt, bleibt der Freiheitsgrad der Drehung um die dritte Handachse 22 erhalten. Der Anbindungswinkel 30 liegt in einem Winkelbereich von 5° bis 85°; als vorteilhafter Anbindungswinkel hat sich ein Winkelbereich von 5° bis 60° gezeigt. Im Ausführungsbeispiel ist ein Anbindungswinkel von 30° gezeigt.

In den Figuren 2 und 3 ist dargestellt, wie ein Endeffektor 46 mit einer Applikationsvorrichtung 9 über eine Tragstütze 29 am Manipulatorflansch 8 gehalten ist. Die Tragstütze 29 ist starr am Manipulatorflansch 8 fixiert; die Applikationsvorrichtung 9 ist über ein Gelenk 32 um eine Schwenkachse 46 schwenkbar an der Tragstütze 29 gehalten. Dabei ist die Anordnung so getroffen, dass die auf die Applikationsvorrichtung 9 wirkenden Bearbeitungskräfte 33 über das Gelenk 32 in die Tragstütze 29 eingeleitet und am Manipulatorflansch 8 abgestützt werden. Die Lage des Gelenks 32 ist dabei so gewählt, dass die auf die Applikationsvorrichtung 9 wirkenden Bearbeitungskräfte 33 in einer Richtung 31 auf den Manipulatorarm 5 abgeleitet werden, die durch den Schnittbereich 25 der Handachsen 20, 21, 22 verläuft. Alle an der Applikationsvorrichtung 9 angreifenden Prozesskräfte werden somit durch die Wahl der Abstützung der Applikationsvorrichtung 9 an der Tragstütze 29 in Richtung 31 auf den Schnittbereich 25 bzw. durch den Schnittpunkt 26 abgeleitet.

In Fig. 2 ist als Applikationsvorrichtung 9 ein Seitenfräser dargestellt; die seitlich auf den Fräser wirkenden Bearbeitungskräfte 33 wirken in Richtung 31, wobei die abgeleiteten Kräfte keine oder nur geringe Momente um die Handachsen 20, 21 und 22 erzeugen.

Ist die Applikationsvorrichtung 9 mit einem Axialfräser versehen, wird die Applikationsvorrichtung 9 entsprechend der Darstellung in Fig. 3 um die Schwenkachse 46 des abstützenden Gelenks 29 verschwenkt, so dass die axial auf das Werkzeug 60 wirkenden Bearbeitungskräfte 33 unmittelbar in Richtung 31 abgeleitet werden; wie Fig. 3 zeigt, ist die Richtung 31 so gewählt, dass sie den Schnittbereich 25 bzw. den Schnittpunkt 26 der drei Handachsen 20, 21 und 22 schneidet.

In den Figuren 2 und 3 ist die Applikationsvorrichtung 9 über das Gelenk 32 an der Tragstütze 29 gehalten, wobei die Tragstütze 29 an dem Manipulatorflansch 8 starr befestigt ist. Die Schwenkachse 46 des Gelenks 32 liegt in einer gedachten Ebene 54, die senkrecht zur dritten Handachse 22 angeordnet ist. Der Abstand der Schwenkachse 46 zur dritten Handachse 22 ist so gewählt, dass die Richtung 31 der Bearbeitungskräfte 33 in jeder vorgesehenen Stellung der Applikationsvorrichtung 9 durch den Schnittpunkt 26 geht. In der in den Figuren 2 und 3 gezeigten Ansicht senkrecht zur Schwenkachse 46 des Gelenks 32 liegen die Schwenkachse 32 und der Schnittbereich 25 bzw. der Schnittpunkt 26 der Handachsen 20, 21, 22 auf einer Verbindungsgeraden 63, die unter dem Anbindungswinkel 30 zur dritten Handachse 22 des Handgelenks 7 liegt. In besonderer Ausgestaltung der Erfindung ist vorgesehen, die Bearbeitungsachse 36 eines fest an der Tragstütze 29 gehaltenen Werkzeugs 60 derart auszurichten, dass sie mit der Verbindungsgeraden 63 zusammenfällt. Die Bearbeitungsachse 36 selbst liegt somit unter dem Anbindungswinkel von 5° bis 85°. insbesondere 5° bis 65° zur Hauptachse 20 des Handgelenks 7. Die Bearbeitungsachse 36 selbst schneidet in gedachter Verlängerung den Schnittbereich 25 bzw. den Schnittpunkt 26 der Handachsen 20, 21, 22.

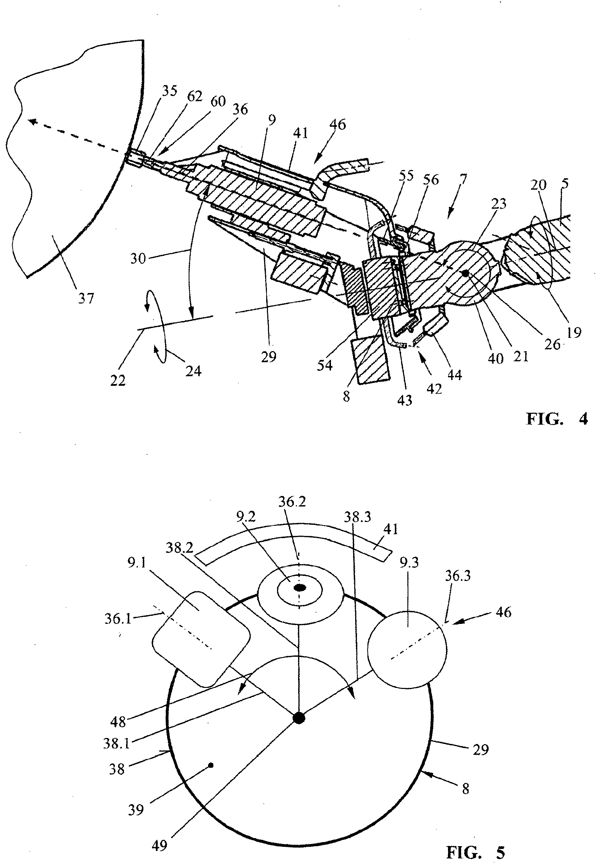

In Fig. 4 ist ein Schnitt durch ein Handgelenk 7 am Ende eines Manipulatorarms 5 eines erfindungsgemäßen Manipulators gezeigt. Der Manipulatorflansch 8 ist um die dritte Handachse 22 drehbar an einem Gehäuseteil 40 des Manipulatorarms 5 gehalten. Über Tragstützen 29 sind Applikationsvorrichtungen 9 am Manipulatorflansch 8 fixiert, zweckmäßig unter einem Anbindungswinkel 30 von 5° bis 60°, im Ausführungsbeispiel nach Fig. 4 in einem Anbindungswinkel von 30° zur dritten Handachse 22.

Der Endeffektor 46 besitzt eine Rahmenstruktur 41, die über einen Drehring 55 drehbar am Gehäuseteil 40 des Handgelenks 7 gelagert ist. Der Drehring 55 ist an einem Kopplungsteil 56 gelagert, das fest mit dem Gehäuseteil 40 verbunden ist. Der Endeffektor 46 umfasst eine Trägerstruktur 54, die fest am Manipulatorflansch 8 gehalten ist. An der Trägerstruktur 54 ist die Tragstütze 29 mit einer oder mehreren Applikationsvorrichtungen 9 festgelegt. Wie Fig. 4 zeigt, ist eine Kupplung 42 vorgesehen, die an der Rahmenstruktur 41 wirkt. Die Kupplung 42 verbindet die Rahmenstruktur 41 in einer ersten Kupplungsstellung drehfest mit dem Manipulatorflansch 8 und in einer zweiten Kupplungsstellung drehfest mit dem Gehäuseteil 40.

Die Kupplung 42 umfasst Mitnahmeelemente 43, die an der Trägerstruktur 54 gehalten sind und die in der ersten Kupplungsstellung die drehfeste Verbindung zur Rahmenstruktur 41 herstellen. Wird in der ersten Kupplungsstellung der Manipulatorflansch 8 um die dritte Handachse 22 gedreht, so drehen die Applikationsvorrichtungen 9, die Mitnahmeelemente 43 und die Rahmenstruktur 41 mit.

In einer zweiten Kupplungsstellung verbindet die Kupplung 42 die Rahmenstruktur 41 drehfest mit dem Gehäuseteil 40. Die Mitnahmeelemente 43 unterbrechen in dieser Kupplungsstellung die drehfeste Verbindung der Trägerstruktur 54 mit der Rahmenstruktur 41. Der Manipulatorflansch 8 mit den daran fixierten Applikationsvorrichtungen 9 ist dadurch in der zweiten Kupplungsstellung gegenüber der Rahmenstruktur 41 um die dritte Handachse 22 drehbar.

Im Ausführungsbeispiel erfolgt die drehfeste Verbindung der Rahmenstruktur 41 mit dem Gehäuseteil 40 über eine Klemmvorrichtung, die am Gehäuseteil 40 gehaltene Klemmelemente 44 umfasst. In der zweiten Kupplungsstellung verbinden die Klemmelemente 44 die Rahmenstruktur 41 drehfest mit dem Kopplungsteil 56, so dass sich die Rahmenstruktur 41 nicht gegenüber dem Gehäuseteil 40 drehen kann. Auch eine andere konstruktive Gestaltung der Kupplung 42 kann vorteilhaft sein.

Für einen Wechsel einer Applikationsvorrichtung 9 wird der Endeffektor 46 in der ersten Kupplungsstellung zusammen mit seiner Rahmenstruktur 41 in eine gewünschte Position gefahren. Kurz vor dem Lösen der Mitnahmeelemente 43 oder gleichzeitig mit dem Lösen der Mitnahmeelemente 43 wird die Rahmenstruktur 41 drehfest mit dem Kopplungsteil 56 und damit mit dem Gehäuseteil 40 verbunden, und zwar durch Verstellung der Klemmelemente 44. Das Verstellen der Kupplung 42 aus der ersten Kupplungsstellung in die zweite Kupplungsstellung erfolgt bei stehendem Manipulatorflansch 8. In der zweiten Kupplungsstellung wird der Manipulatorflansch 8 um die dritte Handachse 22 gedreht. Die Applikationsvorrichtungen 9 drehen bei stillstehender Rahmenstruktur 41 mit, so dass die Applikationsvorrichtungen 9 in eine für den Werkzeugwechsel vorgesehene Position gebracht werden können. Dadurch ist ein Werkzeugwechsel mit Hilfe des Manipulatorantriebs um die dritte Handachse 8 möglich. Für den Werkzeugwechsel wird kein separater Antrieb benötigt.

Im Ausführungsbeispiel nach Fig. 4 ist an der Rahmenstruktur 41 eine Druckstempelbuchse 35 vorgesehen, welche axial entlang der Bearbeitungsachse 36 des Werkzeugs 60, im Ausführungsbeispiel eines Bohrers 62 zu verfahren ist. Diese Druckstempelbuchse 35 dient dazu, den Manipulatorarm 5 gegen das Werkstück 37 zu drücken, um das Gesamtsystem vor der Bearbeitung mittels der Applikationsvorrichtung 9 vorzuspannen. Die Vorspannkraft wirkt nicht auf den Manipulatorflansch 8 des Manipulators selbst, sondern direkt auf das Gehäuseteil 40 des Handgelenks 7. Dadurch wird die dritte Handachse 22 entlastet. Es wird eine erhöhte Genauigkeit bei gleichbleibender Vorspannkraft der Druckstempelbuchse 35 bzw. eine erhöhte Vorspannkraft bei gleichbleibender Genauigkeit ermöglicht.

Durch die vorteilhafte Gestaltung eines um die dritte Handachse 22 drehbaren Endeffektors 46 entfallen ansonsten notwendige Antriebe, die die Applikationsvorrichtungen 9.1, 9.2, 9.3 (Fig. 5) gegenüber dem Manipulatorflansch 8 ausrichten oder verstellen. Der Endeffektor 46 hat somit keinen eigenen Antrieb für die Bewegung der Applikationsvorrichtungen 9.1, 9.2, 9.3 beim Werkzeugwechsel. Ein Wechsel zwischen den Applikationsvorrichtungen 9.1, 9.2, 9.3 erfolgt rotatorisch mit Hilfe des Antriebs um die dritte Handachse 22 des Manipulatorarms 5.

In Fig. 5 ist schematisch die Rahmenstruktur 41 des Endeffektors 46 eines erfindungsgemäßen Manipulators zusammen mit Applikationsvorrichtungen 9.1, 9.2 und 9.3 gezeigt. Die Bearbeitungsachsen 36.1, 36.2 und 36.3 der Applikationsvorrichtungen 9.1, 9.2 und 9.3 fallen mit Mantellinien 38.1, 38.2 und 38.3 eines Kegels 39 zusammen, dessen gedachte Spitze 49 im Schnittbereich 25 bzw. im Schnittpunkt 26 der Handachsen 20, 21, 22 liegt. Die Applikationsvorrichtungen 9.1, 9.2 und 9.3 folgen auf der Mantelfläche 38 des Kegels 39 in Umfangsrichtung aufeinander.

Die Rahmenstruktur 41 des Endeffektors 46 lässt sich über die Kupplung 42 mit dem Manipulatorflansch 8 des Manipulators 1 koppeln und mitdrehen oder abkoppeln und über die Kupplung 42 mit dem Gehäuseteil 40 verbinden.

Sind die mit der Trägerstruktur 54 am Manipulatorflansch 8 verbundenen Mitnahmeelemente 43 mit der Rahmenstruktur 41 gekoppelt und die Klemmelemente 44 der Kupplung 42 gelöst, führt eine Drehung um die dritte Handachse 22 des Manipulators 1 zur Bewegung sowohl der Applikationsvorrichtungen 9 als auch der Rahmenstruktur 41.

Sind die Mitnahmeelemente 43 von der Rahmenstruktur 41 abgekoppelt und die Klemmelemente 44 gespannt, führt eine Bewegung um die dritte Handachse 22 des Manipulators lediglich zur Bewegung der Applikationsvorrichtungen 9 unter der Rahmenstruktur 41, welche mit dem Gehäuseteil 40 des Handgelenks 7 über die Klemmelemente 44 fest verbunden bleibt. Auf diese Weise ist ein Werkzeugwechsel durch Wechsel der Applikationsvorrichtung 9 in Richtung des Doppelpfeils 48 in Fig. 5 möglich.

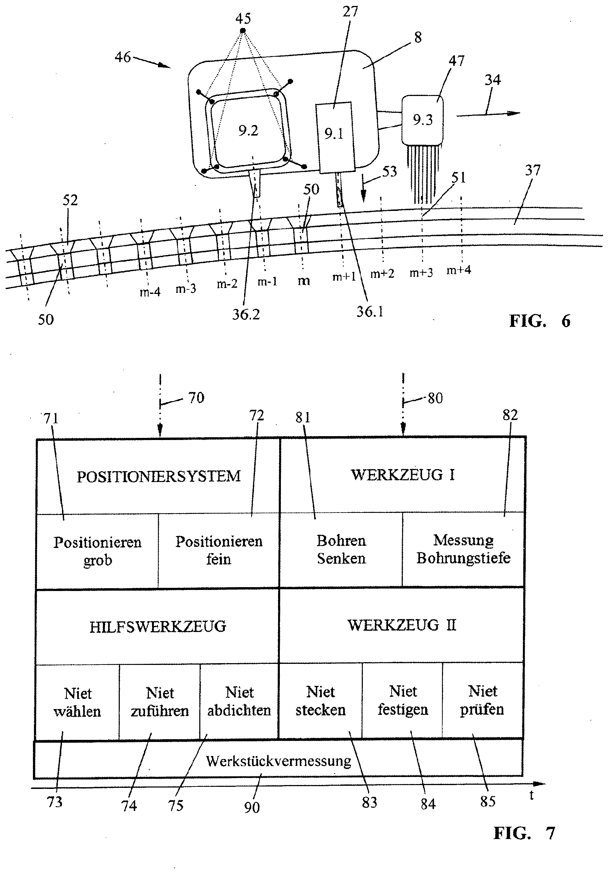

In besonderer Ausgestaltung eines Manipulators 1 ähnlich Fig. 1 mit einem Endeffektor 46 mit Applikationsvorrichtungen ist vorgesehen, an dem Endeffektor 46 mehrere Applikationsvorrichtungen 9.1, 9.2 und 9.3 anzuordnen, wie dies in Fig. 6 dargestellt ist. Eine erste Applikationsvorrichtung 9.1, im Ausführungsbeispiel ein Bohrgerät 27, ist unverstellbar fest am Manipulatorflansch 8 gehalten und wird zusammen mit diesem zum Werkstück 37 positioniert und ausgerichtet.

Am Manipulatorflansch 8 ist ferner eine Applikationsvorrichtung 9.3 in Form einer Messvorrichtung 47 vorgesehen, die dem Bohrgerät 27 in Prozessrichtung 34 vorläuft. Am Manipulatorflansch 8 ist ferner eine zweite Applikationsvorrichtung 9.2 vorgesehen, die als Nietsetzwerkzeug oder dgl. ausgebildet sein kann. Die zweite Applikationsvorrichtung 9.2 ist in ihrer Lage am Manipulatorflansch 8 über eine Verstellvorrichtung 45 gehalten. Dadurch ist die Applikationsvorrichtung 9.2 relativ zur Lage der Applikationsvorrichtung 9.1 am gleichen Manipulatorflansch 8 verstellbar. Dies ist insbesondere bei gekrümmten Werkstücken 37 zweckmäßig.

In Fig. 6 ist dargestellt, wie ein derartiger Endeffektor 46 mit mehreren Applikationsvorrichtungen 9.1, 9.2, 9.3 an einem Werkstück 37 arbeitet. Mittels des Bohrgerätes 27 werden in das Werkstück 37 Durchgangsbohrungen 50 zum Einsetzen von Bolzen, insbesondere Nietbolzen, gefertigt. Hierbei müssen von dem Manipulator bzw. den an dem Manipulatorflansch 8 angeordneten Applikationsvorrichtungen 9.1 bis 9.3 verschiedene Prozesse ausgeführt werden. Zunächst wird das Werkstück 37 mittels der Messvorrichtung 47 vermessen, um die Positionierung des Endeffektors 46 relativ zum Werkstück 37 zu bestimmen. Dann wird der Endeffektor 46 relativ zum Werkstück 37 positioniert, so dass sich eine gewünschte Ausrichtung der Bearbeitungsachse 36.1 des Bohrgeräts 27 ergibt. um dann mit dem Bohrgerät 27 eine Durchgangsbohrung 50 zur Aufnahme eines Nietbolzens zu fertigen; danach wird die Bohrungstiefe der Durchgangsbohrung 50 gemessen, um anhand der gemessenen Bohrungstiefe einen geeigneten Nietbolzen auszuwählen. In einem folgenden Arbeitsschritt wird dann der Nietbolzen zugeführt, ggf. auf den Nietbolzen eine Dichtmasse aufgebracht und der Nietbolzen in eine gefertigte Durchgangsbohrung 50 eingebracht. Mit einem entsprechenden Werkzeug wird der Nietbolzen dann gesetzt bzw. verformt und der gesetzte Niet geprüft. Wird ein derartiger Bearbeitungsprozess in einzelnen Arbeitsschritten seriell nacheinander ausgeführt, ergibt sich eine relativ lange Prozessdauer.

Bei den Applikationsvorrichtungen 9.1, 9.2, 9.3 des Endeffektors 46 gemäß Fig. 6 ist vorgesehen, dass zumindest zwei Arbeitsschritte zugleich, also etwa zeitgleich ausgeführt werden.

Mit der Messvorrichtung 47 wird das Werkstück 37 vermessen, und die Bearbeitungsachse 36.1 des Bohrgeräts 27 wird zur Normalen 51 des Werkstücks 37 einer zu fertigenden Durchgangsbohrung 50 ausgerichtet. Nach der Feinpositionierung des Manipulatorflansches 8 wird mit dem Bohrgerät 27 als Werkzeug I (Fig. 7) die Durchgangsöffnung 50 in das Werkstück 37 gebohrt und anschließend die Ansenkung 52 zur Aufnahme eines Nietkopfes gefertigt. Erfindungsgemäß ist nun vorgesehen, dass mit dem Bohren der Durchgangsbohrung 50 in Fertigungsrichtung 53 in einer vorher gefertigten Durchgangsbohrung 50 durch ein Werkzeug II (Fig. 7) der Niet gesetzt wird. In Fig. 6 wird z. B. an der Stelle m+1 eine Durchgangsbohrung 50 mittels des Bohrgeräts 27 gefertigt und zeitgleich in die Durchgangsbohrung 50 an der Stelle m-1 ein Niet durch die Applikationsvorrichtung 9.1 gesteckt, gefestigt und geprüft. Zeitgleich mit dem Bohren einer Durchgangsöffnung 50 an der Stelle m+1 und dem Setzen eines Niets an der Stelle m-1 wird an der in Prozessrichtung 34 vor der Stelle liegenden Stelle m+3 die Oberfläche des Werkstücks 37 mit der Messvorrichtung 47 vermessen. Erfindungsgemäß werden somit drei Arbeitsschritte an unterschiedlicher Stelle des Werkstücks 37 zeitgleich ausgeführt, wobei durch die Überlagerung der Arbeitsschritte eine signifikant verringerte Prozessdauer erreicht wird.

Die zeitgleiche Durchführung von Arbeitsschritten ist in Fig. 7 schematisch in den durch Pfeile 70 und 80 gekennzeichneten Spalten über der Zeit t wiedergegeben. Zeitgleich durchgeführte Arbeiten sind untereinander gezeigt. Gemäß Spalte 70 kann während der Arbeit eines Positioniersystems und einem groben Positionieren sowie einem feinen Positionieren des Endeffektors 46 gemäß den Feldern 71 und 72 über Hilfswerkzeuge zeitgleich unter Zuhilfenahme in einem vorangegangenen Arbeitsschritt gewonnener Messwerte ein notwendiger Nietbolzen aus einem Vorrat ausgewählt werden (Feld 73), der Nietbolzen zugeführt werden (Feld 74) sowie auf den Nietbolzen ein Dichtmittel aufgebracht werden (Feld 75). Die Grobpositionierung des Endeffektors 46 ist dabei die Bewegung des Endeffektors 46 von einer Bearbeitungsstelle zur nächsten Bearbeitungsstelle und die Feinpositionierung die Ausrichtung der Bearbeitungsachsen 36.1, 36.2 senkrecht zur Werkstückoberfläche. Die Vermessung des Werkstücks 37, anhand der die Positionierung in den Feldern 71 und 72 erfolgt, erfolgt vorteilhaft kontinuierlich durch die Messvorrichtung 47, wie das Feld 90 zeigt.

Ist der Endeffektor 46 mit den Applikationsvorrichtungen 9.1, 9.2, 9.3 positioniert, kann die Durchgangsbohrung 50 gebohrt und die Ansenkung gefertigt werden (Feld 81); anschließend wird die Bohrungstiefe gemessen (Feld 82), damit die notwendigen Daten zum Auswählen eines Nietbolzens (Feld 73) zur Verfügung stehen. Gleichzeitig kann in Fertigungsrichtung 53 mit einer parallelen Applikationsvorrichtung 9.2 der Niet gesteckt (Feld 83), der Niet gefestigt (Feld 84) und abschließend geprüft werden (Feld 84). Nach Fertigung der neuen Durchgangsbohrung 50 und zeitgleichem Setzen des Nietbolzens in einer vorhergehenden Durchgangsbohrung wird in Prozessrichtung 34 erneut positioniert und zeitgleich während dem Positionieren erneut mit den Daten einer vorhergegangenen Vermessung ein zugeordneter Nietbolzen gewählt (Feld 73), zugeführt (Feld 74) und gedichtet (Feld 75).

In Prozessrichtung 34 wird mit der Messvorrichtung 47 die Position der Normalen 51 für eine kommende Durchgangsbohrung 50 an der Stelle m+3 erfasst. Die Messmethode kann taktil, pneumatisch, elektromagnetisch, optisch oder dgl. sein.

Gleichzeitig wird eine Bohrung an der Stelle m+1 gebohrt und in Durchmesser und Tiefe vermessen. Während dem Bohren in Fertigungsrichtung 53 wird in die bereits hergestellte Durchgangsbohrung 50 an der Stelle m-1 ein Nietbolzen eingesteckt und gefestigt. Das Aufbringen eines Dichtmittels auf den Niet kann während der Positionierung des Endeffektors 46 bzw. des Niets vorher erfolgen.

Ist die Durchgangsbohrung 50 an der Stelle m-1 gebohrt und der Nietbolzen gefestigt, wird die Applikationsvorrichtung 9.2 zur Stelle m+2 gebracht und die Bearbeitungsachse 36.2 an der Stelle m+2 senkrecht zur Werkstückoberfläche ausgerichtet. Während dieses Positionierens wird der Nietbolzen für die Durchgangsbohrung m ausgewählt und der Applikationsvorrichtung 9.2 (Werkzeug II) für das Stecken/Festigen und Prüfen des Nietbolzens zugeführt.

## Patentansprüche

1. Manipulator mit einem Manipulatorarm (5), an dessen freiem Ende (6) ein Manipulatorflansch (8) vorgesehen ist, an dem ein Endeffektor (46) mit mehreren Applikationsvorrichtungen (9.1, 9.2, 9.3) zur Bearbeitung eines Werkstücks (37) gehalten ist, wobei der Manipulatorflansch (8) um Handachsen (20, 21, 22) drehbar ist, und eine erste Handachse (20) sich in Richtung der Längsachse (18) des Manipulatorarmes (5) erstreckt, eine zweite Handachse (21) sich quer zur ersten Handachse (20) erstreckt und eine dritte Handachse (22) quer zur zweiten Handachse (21) liegt, wobei der Endeffektor (46) am Handgelenk (7) des Manipulatorarmes (5) drehbar gelagert ist, wobei die Applikationsvorrichtungen (9.1, 9.2, 9.3) auf einer Mantelfläche (38) eines gedachten Kegels (39) in Umfangsrichtung aufeinander folgen, und wobei eine Applikationsvorrichtung (9.1, 9.2, 9.3) durch Drehung des Manipulatorflanschs (8) um die dritte Handachse (22) in eine aktive Arbeitsposition zu verfahren ist.

2. Manipulator nach Anspruch 1, **dadurch gekennzeichnet, dass** der drehbare Endeffektor (46) eine Rahmenstruktur (41) besitzt, die über eine Kupplung (42) in einer ersten Kupplungsstellung drehfest mit einem Gehäuseteil (40) des Manipulatorarms (5) und in einer zweiten Kupplungsstellung drehfest mit dem Manipulatorflansch (8) verbunden ist.

3. Manipulator nach Anspruch 2, **dadurch gekennzeichnet, dass** die Kupplung (42) Mitnahmeelemente (43) des Endeffektors (46) und eine zwischen dem Gehäuseteil (40) und der Rahmenstruktur (41) wirkende Klemmvorrichtung umfasst.

4. Manipulator nach Anspruch 2 oder 3, **dadurch gekennzeichnet, dass** an der Rahmenstruktur (41) eine Druckstempelbuchse (35) gehalten ist, die längs einer Bearbeitungsachse (36) des Werkzeugs (61) gegen das Werkstück (37) verfahrbar ist.

## Claims

1. Manipulator having a manipulator arm (5) at the free end (6) of which a manipulator flange (8) is provided on which an end effector (46) having a plurality of application devices (9.1, 9.2, 9.3) for machining a workpiece (37) is held, wherein the manipulator flange (8) is rotatable about hand axes (20, 21, 22), and a first hand axis (20) extends in the direction of the longitudinal axis (18) of the manipulator arm (5), a second hand axis (21) extends transversely to the first hand axis (20) and a third hand axis (22) lies transversely to the second hand axis (21), wherein the end effector (46) is rotatably mounted on the wrist (7) of the manipulator arm (5), wherein the application devices (9.1, 9.2, 9.3) follow one another in a circumferential direction on a lateral surface (38) of an imaginary cone (39), and wherein an application device (9.1, 9.2, 9.3) can be moved into an active operating position by rotation of the manipulator flange (8) about the third hand axis (22).

2. Manipulator according to Claim 1, **characterized in that** the rotatable end effector (46) has a frame structure (41) which, by way of a coupling (42), is non-rotatably connected to a housing part (40) of the manipulator arm (5) in a first coupling position and is non-rotatably connected to the manipulator flange (8) in a second coupling position.

3. Manipulator according to Claim 2, **characterized in that** the coupling (42) comprises driver elements (43) of the end effector (46) and a clamping device acting between the housing part (40) and the frame structure (41) .

4. Manipulator according to Claim 2 or 3, **characterized in that** a ram sleeve (35), which is movable along a machining axis (36) of the tool (61) towards the workpiece (37), is held on the frame structure (41).

## Revendications

1. Manipulateur comprenant un bras de manipulateur (5) à l'extrémité libre (6) duquel est prévue une bride de manipulateur (8) au niveau de laquelle est retenu un effecteur terminal (46) comprenant plusieurs dispositifs d'application (9.1, 9.2, 9.3) pour usiner une pièce (37), la bride de manipulateur (8) pouvant tourner autour d'axes de poignet (20, 21, 22), et un premier axe de poignet (20) s'étendant dans la direction de l'axe longitudinal (18) du bras de manipulateur (5), un deuxième axe de poignet (21) s'étendant transversalement au premier axe de poignet (20) et un troisième axe de poignet (22) étant situé transversalement au deuxième axe de poignet (21), l'effecteur terminal (46) étant supporté de manière rotative au niveau du poignet (7) du bras de manipulateur (5), les dispositifs d'application (9.1, 9.2, 9.3) se suivant dans la direction périphérique sur une surface d'enveloppe (38) d'un cône imaginaire (39), et un dispositif d'application (9.1, 9.2, 9.3) devant être déplacé autour du troisième axe de poignet (22) dans une position de travail active par rotation de la bride de manipulateur (8).

2. Manipulateur selon la revendication 1, **caractérisé en ce que** l'effecteur terminal rotatif (46) présente une structure de cadre (41) qui est connectée par le biais d'un accouplement (42) de manière solidaire en rotation à une partie de boîtier (40) du bras de manipulateur (5) dans une première position d'accouplement et de manière solidaire en rotation à la bride de manipulateur (8) dans une deuxième position d'accouplement.

3. Manipulateur selon la revendication 2, **caractérisé en ce que** l'accouplement (42) comprend des éléments d'entraînement (43) de l'effecteur terminal (46) et un dispositif de serrage agissant entre la partie de boîtier (40) et la structure de cadre (41).

4. Manipulateur selon la revendication 2 ou 3, **caractérisé en ce qu'**une douille de piston de compression (35) est retenue au niveau de la structure de cadre (41), laquelle peut être déplacée vers la pièce (37) le long d'un axe d'usinage (36) de l'outil (61).
